# EUROPEAN PATENT APPLICATION

(11) **EP 4 782 305 A1**
(43) Date of publication of application: **29.07.2026**
(21) Application number: 24881761.1
(22) Date of filing: 25.10.2024
(51) Int. Cl.: B62B 7/06, B62B 7/12, B62B 9/10, B60N 2/28

(54) **CHILD CARRIER**

(30) Priority: 26.10.2023 CN 202311407449
(71) Applicant: Sunnylove Baby Products Zhuhai Co., Ltd., Zhuhai, Guangdong 519000 (CN)
(72) Inventor: LIU, Xiuping, Zhuhai, Guangdong 519000 (CN)
(74) Representative: Metida
(86) International application number: PCT/CN2024/127462
(87) International publication number: WO 2025/087402

(57) **Abstract**

The present application discloses a baby carrier, having a first use state and a second use state that are switchable to each other, and including: a carrier body, a joint assembly, a front leg assembly, and a rear leg assembly; the first use state is obtained in response to the rear leg assembly rotating clockwise relative to the carrier body about a pivot shaft, the front leg assembly rotating clockwise relative to the carrier body through the joint assembly, and an upper end of the rear leg assembly linkage urging the front leg assembly to slide upward along a guiding slot, causing the front leg assembly and the rear leg assembly to coordinately and linkagely fold and come together; the second use state is obtained in response to the rear leg assembly rotating counterclockwise relative to the carrier body about the pivot shaft Al, the front leg assembly rotating counterclockwise relative to the carrier body through the joint assembly, and the upper end of the rear leg assembly linkage urging the front leg assembly to slide downward along the guiding slot, causing the front leg assembly and the rear leg assembly to coordinately and linkagely unfold; leading to the solution employing a more lightweight structure and meeting usage requirements such as being easy to carry, easy to fold/unfold, easy to push, and easy to store.

## Description

### TECHNICAL FIELD

The present disclosure relates to the field of baby safety travel products, and more particularly relates to a baby car seat or a stroller, a walking stroller, and other baby carriers.

### BACKGROUND

In order to facilitate carrying infants out for travel with baby safety seats or carry cots, most baby safety seats in the related art, when used in outdoor scenarios, assemble the seat body with other frames to form an infant stroller for pushing on the ground; when needing to be used inside a car, the seat body is disassembled from the frame and then installed on a car seat for use. In some implementations, the aforementioned baby safety seats or carry cots, in order to meet the usage requirements in outdoor scenarios when going out, specifically need to be equipped with dedicated frames. For this purpose, the quantity and weight of baby carriers to be carried for outings are increased, which is inconvenient for users to carry, and also inconvenient for operations such as quickly switching to pushing mode and quickly folding and storing.

Aiming at the above technical problem, the present disclosure is specifically researched and proposed.

### SUMMARY

A technical problem to be solved by the present disclosure is to provide a baby carrier, which adopts a more lightweight structure, meets usage requirements such as being easy to carry, easy to fold/unfold, easy to push, and easy to store, and does not require an additional dedicated frame.

To solve the above technical problem, the present disclosure includes a baby carrier, having a first use state and a second use state that are switchable to each other, including:
a carrier body, where the carrier body is provided with a seat portion and a backrest portion;
a joint assembly, where the joint assembly is rotatably provided on the carrier body, and a guiding slot is provided on the joint assembly;
a front leg assembly, where a front wheel is connected to a lower end of the front leg assembly, the front leg assembly is slidably connected to the guiding slot, and is rotatably connected to the carrier body through the joint assembly, and an upper end of the front leg assembly passes through the guiding slot;
a rear leg assembly, where a rear wheel is connected to a lower end of the rear leg assembly, an upper portion of the rear leg assembly away from the rear wheel is rotatably connected to the carrier body via a pivot shaft, and an upper end of the rear leg assembly is pivotally connected to the upper end of the front leg assembly;
a first use state is obtained in response to the rear leg assembly rotating clockwise relative to the carrier body around the pivot shaft, the front leg assembly rotating clockwise relative to the carrier body through the joint assembly, and the upper end of the rear leg assembly linkage urging the front leg assembly to slide upward along the guiding slot, causing the front leg assembly and the rear leg assembly to coordinately and linkagely fold and come together;
the second use state is obtained in response to the rear leg assembly rotating counterclockwise relative to the carrier body around the pivot shaft, the front leg assembly rotating counterclockwise relative to the carrier body through the joint assembly, and the upper end of the rear leg assembly linkage urging the front leg assembly to slide downward along the guiding slot, causing the front leg assembly and the rear leg assembly to coordinately and linkagely unfold.

According to the baby carrier mentioned above, the baby carrier is configured to be connected to a car seat for use or to be connected to an independent base for use in the first use state; and the baby carrier is configured to be used as an infant stroller in the second use state.

According to the baby carrier mentioned above, the baby carrier further includes a use state locking assembly, where the use state locking assembly is configured to lock the baby carrier in the first use state and the second use state.

According to the baby carrier mentioned above, the use state locking assembly is configured to automatically lock the front leg assembly in response to the front leg assembly rotating clockwise and abutting against a preset position of the seat portion to form the first use state, while the rear leg assembly is linked by the front leg assembly and abuts against the seat portion; and the use state locking assembly is further configured such that after unlocking the first use state, the front leg assembly, the front wheel, the rear leg assembly, and the rear wheel are driven by their own gravity, driving the rear leg assembly to rotate counterclockwise around the pivot shaft while also driving the front leg assembly to rotate counterclockwise relative to the carrier body through the joint assembly, and the upper end of the rear leg assembly links with the front leg assembly and causes the front leg assembly to slide downward along the guiding slot, the front leg assembly and the rear leg assembly mutually and cooperatively unfold, and the use state locking assembly automatically locks the front leg assembly in response to the front leg assembly sliding downward along the guiding slot and unfolding to a preset position forming the second use state.

According to the baby carrier mentioned above, the joint assembly includes a joint block rotatably connected to a seat portion side of the carrier body, the guiding slot is provided on the joint block, the use state locking assembly is configured to lock the front leg assembly in the first use state and the second use state, the use state locking assembly includes a state locking pin elastically retractably provided on the carrier body and a state unlocking member configured to drive the state locking pin to retract and extend, and the state locking pin is eccentrically provided relative to a pivot axis of the joint assembly, and a first use state locking hole and a second use state locking hole are provided on the front leg assembly at intervals along its length direction.

According to the baby carrier mentioned above, the use state locking assembly is configured to simultaneously lock the joint block and the front leg assembly in the first use state and the second use state, the use state locking assembly further includes a first joint locking hole and a second joint locking hole provided on the joint block, where the first joint locking hole and the second joint locking hole are correspondingly aligned with the first use state locking hole and the second use state locking hole respectively in the first use state and the second use state.

According to the baby carrier mentioned above, the front leg assembly includes a sliding segment configured to be slidably and cooperatively connected with the guiding slot, the first use state locking hole is located on the sliding segment and close to an end side of the front wheel, and the second use state locking hole is located on the sliding segment and away from the end side of the front wheel.

According to the baby carrier mentioned above, the front leg assembly further includes a first limiting portion and a second limiting portion respectively provided at two end sides of the sliding segment, and the state locking pin is aligned and elastically inserted into the first use state locking hole in response to the front leg assembly sliding relative to the guiding slot causing the first limiting portion to abut against an edge of an opening of the guiding slot, and the state locking pin is aligned and elastically inserted into the second use state locking hole in response to the front leg assembly sliding relative to the guiding slot causing the second limiting portion to abut against the edge of the opening of the guiding slot.

According to the baby carrier mentioned above, a flexible connecting member is provided between the front leg assembly and the rear leg assembly, and the flexible connecting member is straightened and tensioned in the second use state to limit a distance between the front wheel and the rear wheel.

According to the baby carrier mentioned above, reinforcing crossbars are provided between the two front leg assemblies and between the two rear leg assemblies, and corresponding avoidance structures configured to mutually avoid each other to allow the front wheels and the rear wheels to abut against both side surfaces of the seat portion in the first use state are provided on the reinforcing crossbars or on a bottom of the seat portion.

According to the baby carrier mentioned above, a backrest plate is provided on an inner side of the backrest portion, a backrest adjustment mechanism configured to adjust a highest gear angle and a lowest gear angle between the backrest plate and the backrest portion is provided between the backrest plate and the backrest portion, the backrest adjustment mechanism is configured to lock the backrest plate at the highest gear angle in response to the baby carrier being connected to the car seat or the independent base for use in the first use state after the backrest plate rotates relative to the backrest portion; to avoid impact during driving and protect an infant's cervical spine; and the backrest adjustment mechanism is simultaneously configured to allow the backrest plate to be switched and adjusted between the highest gear angle and the lowest gear angle in the second use state.

According to the baby carrier mentioned above, a lower side of the backrest plate is rotatably connected to the backrest portion, the backrest adjustment mechanism including a backrest adjustment slide rod, a push rod, a movable chute provided on the backrest plate and a fixed chute provided on the backrest portion, the movable chute and the fixed chute being arranged crosswise, and the backrest adjustment slide rod being simultaneously slidably connected to the movable chute and the fixed chute, the backrest plate further being provided with a drive chute, the push rod being movably connected along its axial direction to the seat portion, and an upper end of the push rod being slidably connected to the drive chute, a lower end of the push rod extending out from a bottom of the seat portion in a second use state, and the lower end of the push rod being pushed by an upper surface of a car seat or an independent base to retract into the bottom of the seat portion in a first use state.

According to the baby carrier mentioned above, the backrest adjustment mechanism further includes a slide rod locking block provided on the backrest plate and located at an upper part of the moving sliding slot and configured to lock the backrest adjustment slide rod in response to the backrest plate being at the highest gear angle, the backrest plate further being provided with an adjustment release button for linking an unlocking action of the slide rod locking stopper.

According to the baby carrier mentioned above, a display window is provided on the backrest plate, the backrest adjustment slide rod being provided with a color display identification block for being displayed and recognized by the display window in response to the backrest plate being at the highest gear angle.

According to the baby carrier mentioned above, further including a push handle assembly, the push handle assembly and the carrier body being rotatably connected via a push handle joint, the push handle joint being configured to lock the push handle assembly relative to the carrier body at a plurality of angles.

Compared with the prior art, the baby carrier of the present disclosure provides the following advantages:
1. The front leg assemblies are connected through the joint assembly and the guiding slots, the front leg assemblies slide relative to the joint assembly while rotating, enabling the front leg assemblies and the rear leg assemblies to quickly, efficiently, and cooperatively fold to the first use state or unfold to the second use state, and in response to being in the first use state, the front leg assemblies, the front wheels, the rear leg assemblies, and the rear wheels are respectively attached to the side of the seat portion, in response to the folding and unfolding being achievable without adding other connecting rods, thereby achieving minimized folding volume and minimized overall weight.
2. The baby carrier of the present disclosure has a first use state and a second use state switchable to each other, enabling a user to avoid carrying an additional dedicated stroller frame when going out by car, effectively reducing the number and weight of baby equipment to be carried, and having the characteristic of being convenient for travel.
3. In response to being in either the first use state or the second use state, locking and unlocking are performed via the use state locking assembly, providing one-key switching, avoiding the problem of cumbersome operation.
4. In response to being in the second use state, pulling the front leg assemblies and the rear leg assemblies to an unfolded angle via the flexible connecting member, giving them a stable spacing, and forming a stable triangular unfolded structure; and providing reinforcing crossbars between the two front leg assemblies and between the two rear leg assemblies, making it more stable and reliable in the second use state.
5. Enabling the backrest plate, via the backrest adjustment mechanism, to have the function of switching adjustment between a highest gear angle and a lowest gear angle, and, in response to being connected for use with an independent base or a car seat in the first use state, the backrest plate being usable only at the highest gear angle, such a designed structure effectively avoiding the problem of injuring an infant's cervical spine due to forgetting adjustment and due to an impact during vehicle travel, thus being safer.
6. In response to being in the second use state, the backrest plate being switchably adjustable between the highest gear angle and the lowest gear angle, increasing personalized use for adjusting the backrest angle, in order to obtain a comfortable riding experience.

### BRIEF DESCRIPTION OF THE DRAWINGS

Specific implementations of the present disclosure are described in further detail below with reference to the accompanying drawings, in which:
FIG. 1 is a side view of the present disclosure in a second use state;
FIG. 2 is a first perspective view of the present disclosure in the second use state;
FIG. 3 is a second perspective view of the present disclosure in the second use state;
FIG. 4 is a side view of the present disclosure in a semi-folded state;
FIG. 5 is a perspective view of the present disclosure in the semi-folded state;
FIG. 6 is a side view of the present disclosure in a first use state;
FIG. 7 is a first perspective view of the present disclosure in the first use state;
FIG. 8 is a second perspective view of the present disclosure in the first use state;
FIG. 9 is a first exploded view of the present disclosure in the second use state;
FIG. 10 is a second exploded view of the present disclosure in the second use state;
FIG. 11 is a cross-sectional view of a front leg assembly being locked when the present disclosure is in the second use state;
FIG. 12 is a cross-sectional view of the front leg assembly being unlocked when the present disclosure is in the second use state;
FIG. 13 is a side view of a push rod of a backrest adjustment mechanism in a seat portion bottom when the present disclosure is in the first use state;
FIG. 14 is a schematic perspective structural view of a backrest plate, the push rod, and a carrier body being separated in the first use state of the present disclosure;
FIG. 15 is a cross-sectional view of the push rod being connected to a drive sliding slot and a backrest adjustment slide rod being connected to a fixed sliding slot when the backrest plate is adjusted to a lowest gear angle in the present disclosure;
FIG. 16 is a cross-sectional view of the backrest adjustment slide rod being connected to the fixed sliding slot and a moving sliding slot when the backrest plate is adjusted to the lowest gear angle in the present disclosure;
FIG. 17 is a cross-sectional view of the push rod being connected to the drive sliding slot and the backrest adjustment slide rod being connected to the fixed sliding slot when the backrest plate is adjusted to a highest gear angle in the present disclosure;
FIG. 18 is a cross-sectional view of the backrest adjustment slide rod being connected to the fixed sliding slot and the moving sliding slot when the backrest plate is adjusted to the lowest gear angle in the present disclosure;
FIG. 19 is a schematic diagram of a lower end of the push rod positively abutting a surface of an independent base during use when connected to the independent base in the first use state of the present disclosure;
FIG. 20 is a schematic diagram of the lower end of the push rod positively abutting a surface of a car seat during use when connected to the car seat in the first use state of the present disclosure.

### DETAILED DESCRIPTION

The following describes in detail the implementations of the present disclosure with reference to the accompanying drawings.

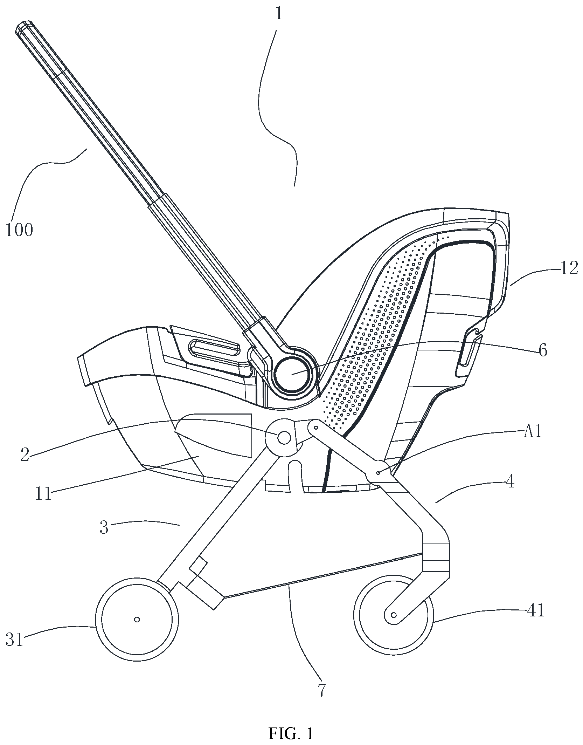

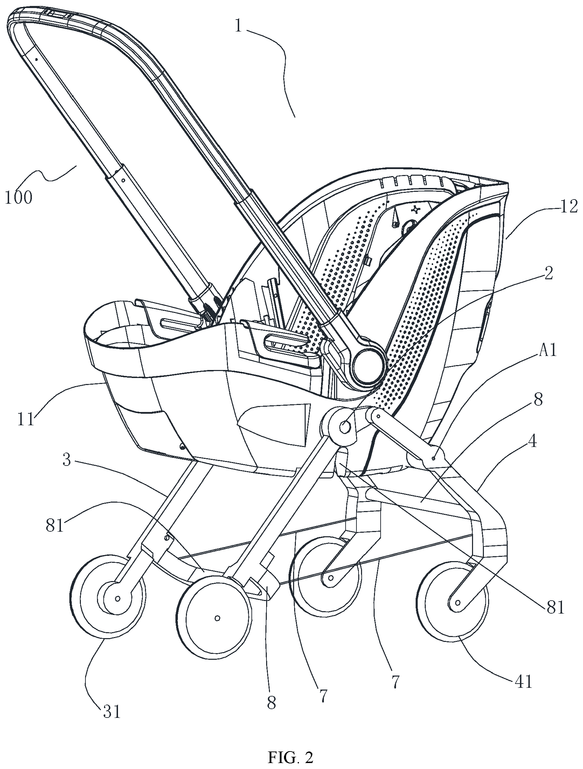

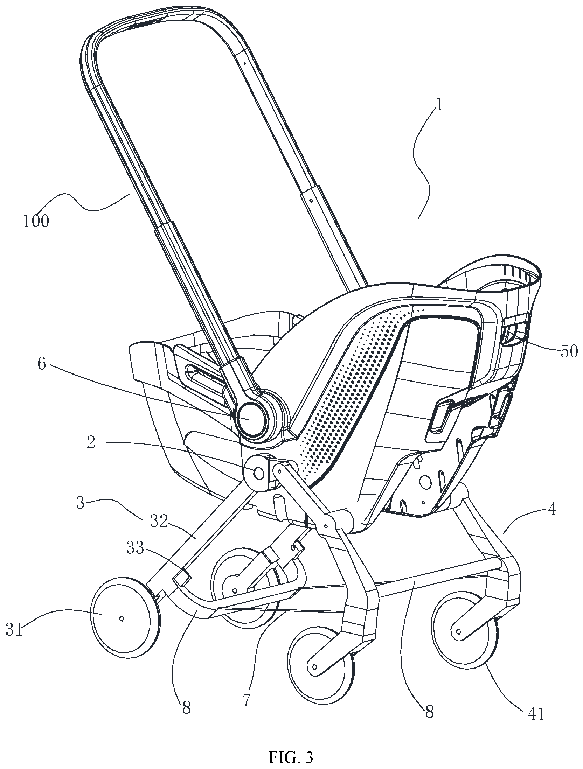

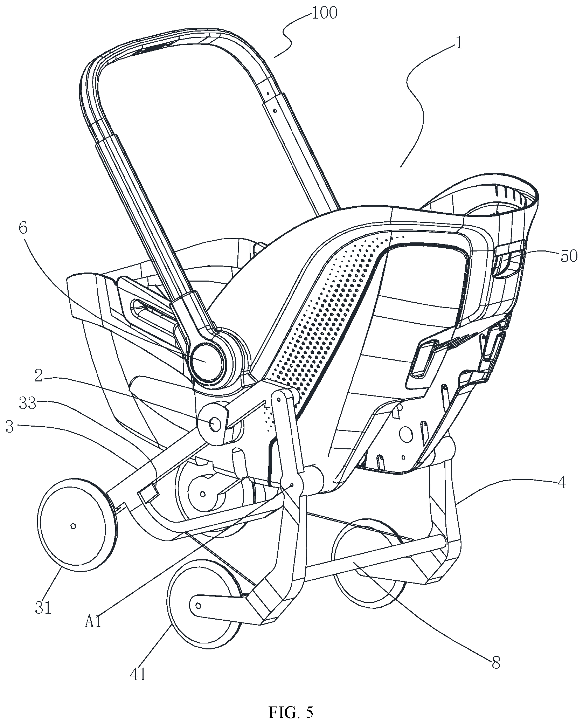

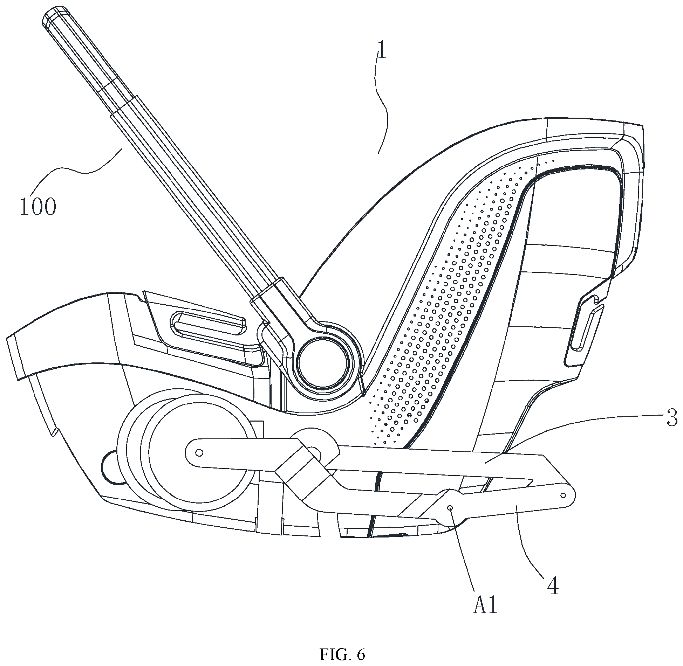

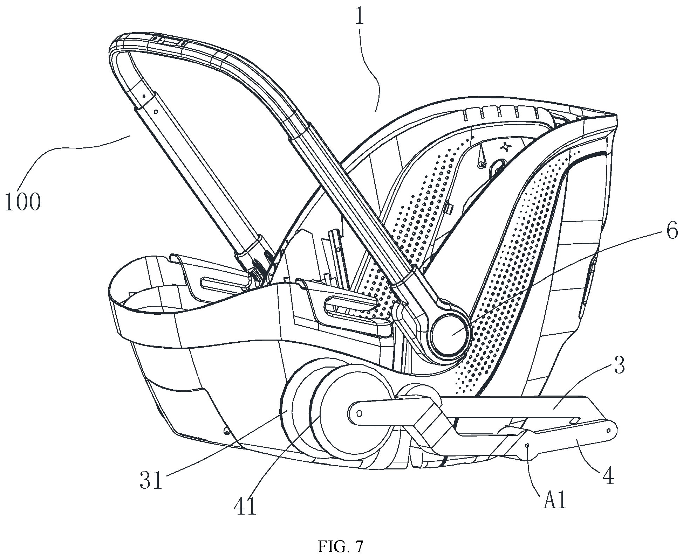

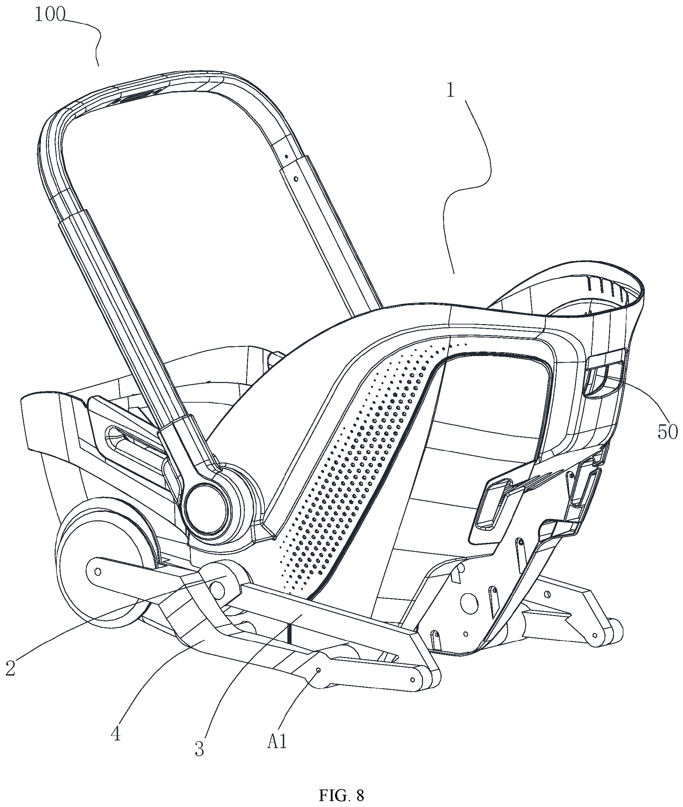

Referring to FIGS. 1 to 8, the present disclosure includes a baby carrier, having a first use state and a second use state switchable between each other, including: a carrier body 1, a joint assembly 2, a front leg assembly 3, and a rear leg assembly 4, the carrier body 1 having a seat portion 11 and a backrest portion 12; the joint assembly 2 is rotatably provided at two sides of the seat portion 11 of the carrier body 1, and each joint assembly 2 is provided with a guiding slot 21; the front leg assembly 3 has a front wheel 31 connected to a lower end thereof, the front leg assembly 3 is slidably connected to the guiding slot 21, and is rotatably connected to the carrier body 1 through the joint assembly 2, and an upper end of the front leg assembly 3 passes through the guiding slot 21; the rear leg assembly 4 has a rear wheel 41 connected to a lower end thereof, an upper portion of the rear leg assembly 4 distal to the rear wheel 41 is rotatably connected to the carrier body 1 through a pivot shaft A1, and the upper end of the rear leg assembly 4 is pivotally connected to the upper end of the front leg assembly 3; the front leg assembly 3 rotates clockwise relative to the carrier body 1 through the joint assembly 2 in response to the rear leg assembly 4 rotating clockwise relative to the carrier body 1 about the pivot shaft A1, and the upper end of the rear leg assembly 4 linkage urges the front leg assembly 3 to slide upward along the guiding slot 21, leading to the front leg assembly 3 and the rear leg assembly 4 cooperatively linking to fold and come together to obtain the first use state, during this folding and coming together process, mainly the front leg assembly is cooperatively connected through the joint assembly and the guiding slot, the front leg assembly sliding relative to the joint assembly while rotating, leading to the front leg assembly and the rear leg assembly quickly and efficiently folding to the first use state, and being at the first use state, as shown in FIGS. 6 to 8, the front leg assembly, the front wheel, the rear leg assembly, and the rear wheel correspondingly abut against a side of the seat portion, and are all higher than a bottom surface of the seat portion, thus not affecting connection and use with a car seat or an independent base in the first use state; achieving minimized folded volume and minimized overall weight as this folding/unfolding is achieved without additionally adding other connecting rods.

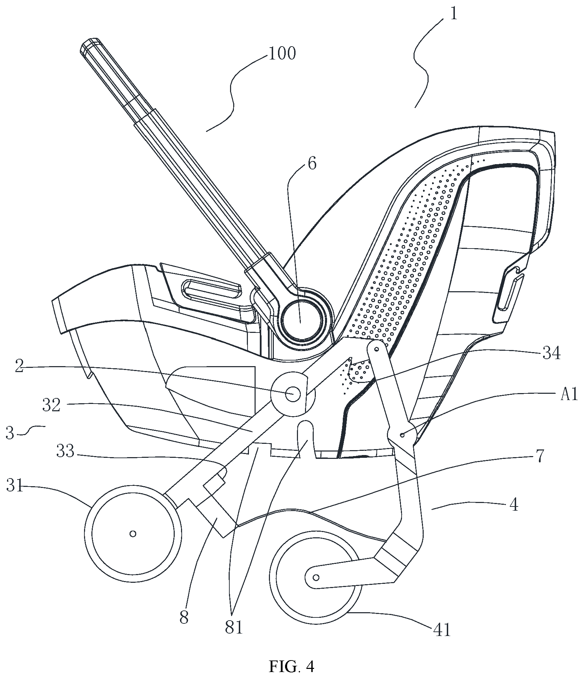

Referring to FIGS. 4 to 5, the front leg assembly 3 rotates counterclockwise relative to the carrier body 1 through the joint assembly 2 in response to the rear leg assembly 4 rotating counterclockwise relative to the carrier body 1 about the pivot shaft A1, and the upper end of the rear leg assembly 4 linkage urges the front leg assembly 3 to slide downward along the guiding slot 21, leading to the front leg assembly 3 and the rear leg assembly 4 cooperatively linking to unfold to obtain the second use state; during this process, the front leg assembly sliding relative to the joint assembly while rotating, similarly, this unfolding has characteristics of being quick and efficient.

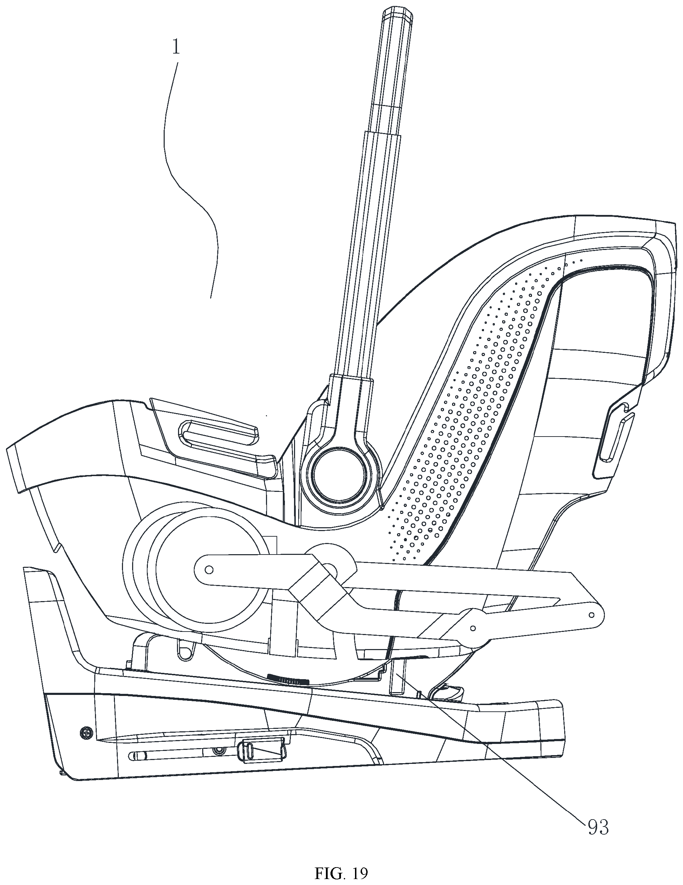

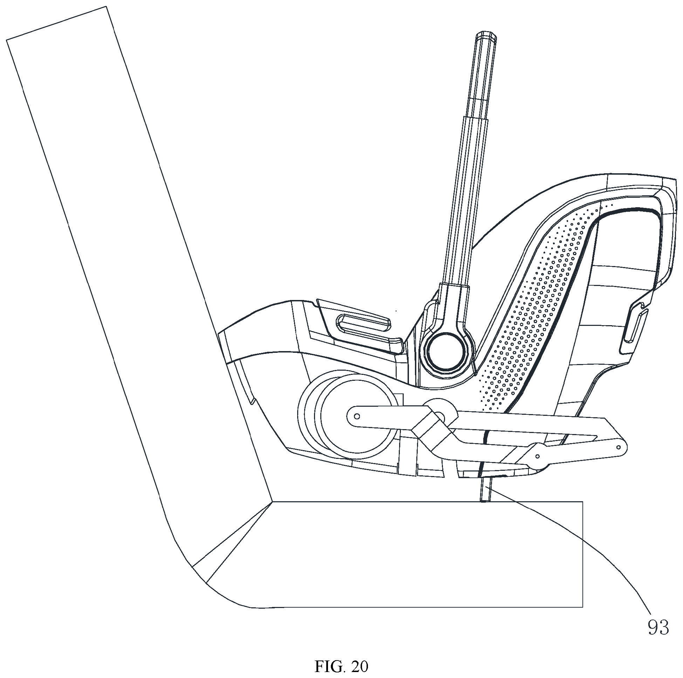

Referring to FIG. 20, the baby carrier is configured to be connected and used with a car seat in the first use state, or as shown in FIG. 19, the baby carrier is configured to be connected and used with an independent base; as shown in FIGS. 1 to 3, the baby carrier is used as an infant stroller in the second use state, therefore, a user using the product of the present disclosure may switch use while driving out, without needing to additionally equip a dedicated stroller frame, effectively reducing the number and weight of baby apparatus to be carried, having a characteristic of convenient travel.

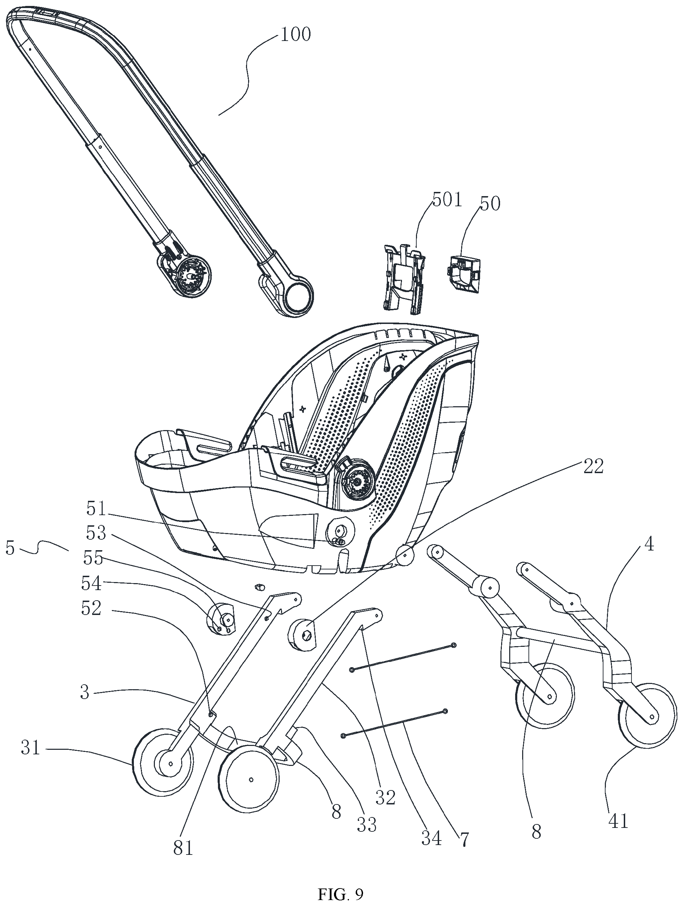

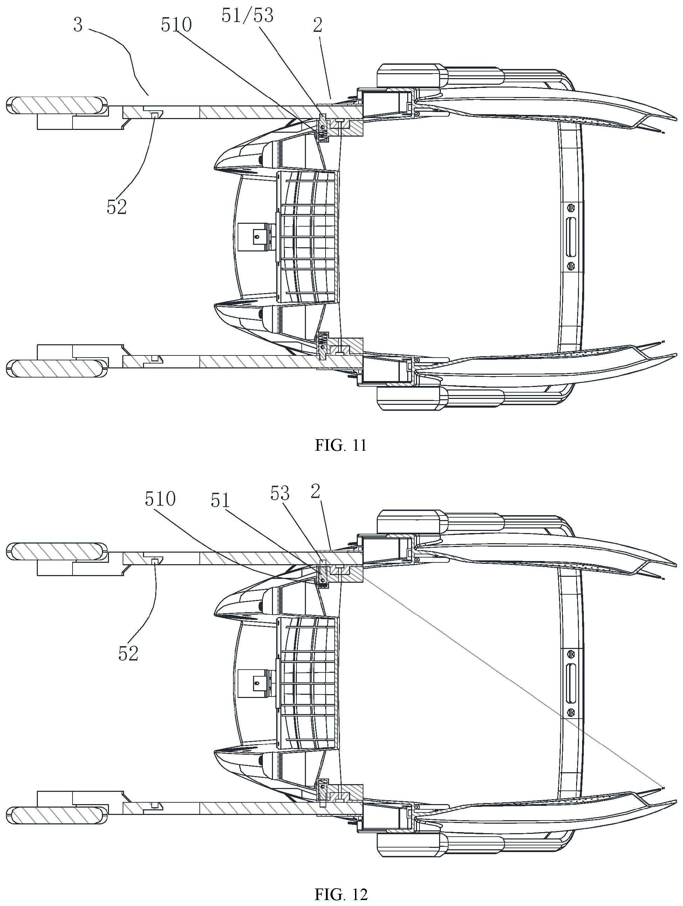

Referring to FIGS. 9 to 12, in some implementations, to ensure stable and reliable use states, the baby carrier further includes a use state locking assembly 5, the use state locking assembly 5 being configured to lock the baby carrier in the first use state and the second use state; in some implementations, the use state locking assembly 5 is configured to automatically lock the front leg assembly 3 in response to the front leg assembly 3 rotating clockwise and abutting against a preset position of the seat portion 11 to present the first use state, simultaneously the rear leg assembly 4 being cooperatively linked by the front leg assembly 3 to abut against the seat portion 11; and the use state locking assembly 5 is further configured, after releasing the locking of the first use state, the front leg assembly 3, the front wheel 31, the rear leg assembly 4, and the rear wheel 41 being acted upon by their own gravity, the front leg assembly 3 rotating counterclockwise relative to the carrier body 1 through the joint assembly 2 in response to the rear leg assembly 4 rotating counterclockwise about the pivot shaft A1, and the upper end of the rear leg assembly 4 linking the front leg assembly 3 and leading to the front leg assembly 3 sliding downward along the guiding slot 21, the front leg assembly 3 and the rear leg assembly 4 mutually linking and cooperating to unfold, the use state locking assembly 5 automatically locking the front leg assembly 3 in response to the front leg assembly 3 sliding downward along the guiding slot 21 to a preset position presenting the second use state; having characteristics of being labor-saving, quick, and efficient during the process of switching to the second use state because utilizing its own gravity action.

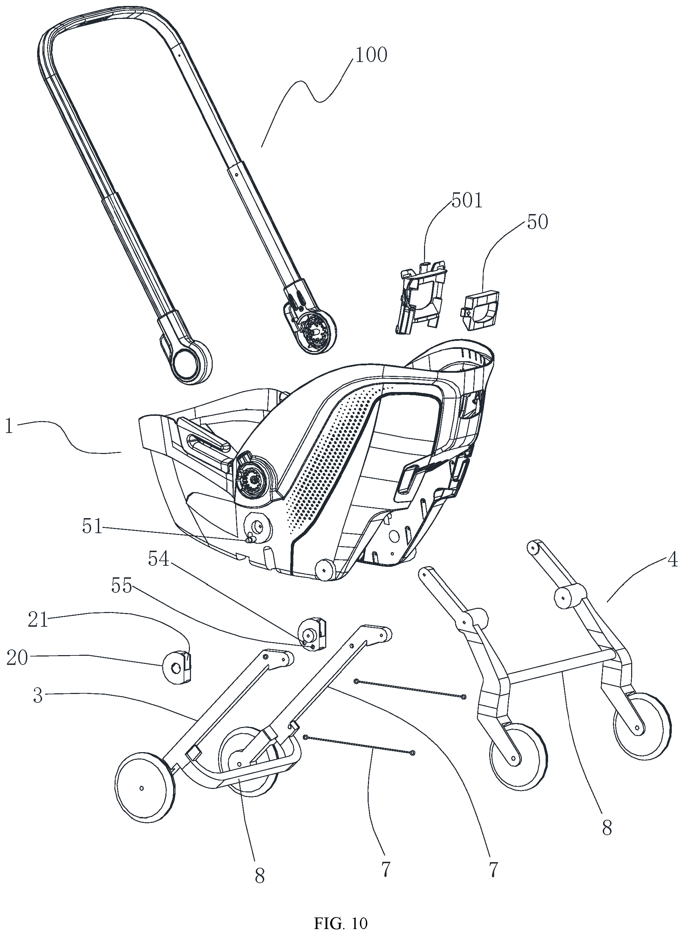

Referring to FIGS. 9 and 10, the joint assembly 2 includes a joint block 20 rotatably connected to a side of the seat portion 11, the guiding slot 21 is provided on the joint block 20, the use state locking assembly 5 is configured to lock the front leg assembly 3 in the first use state and the second use state, the use state locking assembly 5 includes a state locking pin 51 elastically biased by a locking spring 510 and provided on the carrier body 1 and a state unlocking member 50 for driving the state locking pin 51 to extend and retract, and the state locking pin 51 is eccentrically provided relative to a pivot of the joint assembly 2, the state unlocking member 50 is engaged by a state unlocking cover 501 at an upper portion of a rear side of the backrest portion 12, and the state unlocking member 50 is movable up and down relative to the backrest portion 12, specifically, the state unlocking member 50 is connected to the state locking pin 51 through a steel cable, thereby linkage controlling elastic extending and retracting movement of the state locking pin 51.

Referring to FIGS. 9 and 10, the front leg assembly 3 is provided along its length direction with a first use state locking hole 52 and a second use state locking hole 53 spaced apart, the use state locking assembly 5 is configured to simultaneously lock the joint block 20 and the front leg assembly 3 in the first use state and the second use state, the use state locking assembly 5 further includes a first joint locking hole 54 and a second joint locking hole 55 provided on the joint block 20, respectively alignable correspondingly with the first use state locking hole 52 and the second use state locking hole 53 in the first use state and the second use state, the first joint locking hole 54 and the second joint locking hole 55 are eccentrically provided on the joint block 20, and a central angle between the first joint locking hole 54 and the second joint locking hole 55 equals an angle the front leg assembly rotates while switching between the first use state and the second use state.

As shown in FIG. 9, the front leg assembly 3 includes a sliding segment 32 configured to slidingly fit and connect with the guiding slot, the first use state locking hole 52 being provided at the sliding segment 32 and proximate to an end side of the front wheel 31, the second use state locking hole 53 being provided at the sliding segment 32 and distal to the end side of the front wheel 31. For accurately locking the front leg assembly, the front leg assembly 3 further includes a first limiting portion 33 and a second limiting portion 34 correspondingly provided at two end sides of the sliding segment 32, and the state locking pin 51 aligning and elastically inserting into the first use state locking hole 52 in response to the front leg assembly 3 sliding relative to the guiding slot causing the first limiting portion 33 to abut against an edge of an opening of the guiding slot, and the state locking pin 51 aligning and elastically inserting into the second use state locking hole 53 in response to the front leg assembly 3 sliding relative to the guiding slot causing the second limiting portion 34 to abut against the edge of the opening of the guiding slot.

As shown in FIGS. 1 to 3, a flexible connecting member 7 such as a steel cable, a pull rope, or the like is provided between the front leg assembly 3 and the rear leg assembly 4, not affecting folding in response to switching to the first use state; and the flexible connecting member 7 being straightened and tensioned in the second use state to limit a distance between the front wheel 31 and the rear wheel 41, pulling the front leg assembly and the rear leg assembly to an unfolded angle via the flexible connecting member, causing them to have a stable distance, and forming a stable triangular structure, leading to being more stable and reliable in the second use state. In some implementations, a reinforcing crossbar 8 is provided between the two front leg assemblies 3 and between the two rear leg assemblies 4, the reinforcing crossbar 8 or a bottom of the seat portion 11 correspondingly being provided with avoidance structures 81 configured to avoid each other in the first use state to cause the front wheel 31 and the rear wheel 41 to attach to two sides of the seat portion 11, in the present embodiment, the avoidance structures 81 including an accommodation recess provided on the bottom of the seat portion 11 and configured to accommodate the reinforcing crossbar 8, in some implementations, the reinforcing crossbar 8 provided between the two front leg assemblies 3 adopting a U-shaped structure, the U-shaped structure correspondingly cooperating with an accommodation recess, the accommodation recess not requiring being designed too deep to avoid affecting structural strength or design of the carrier body.

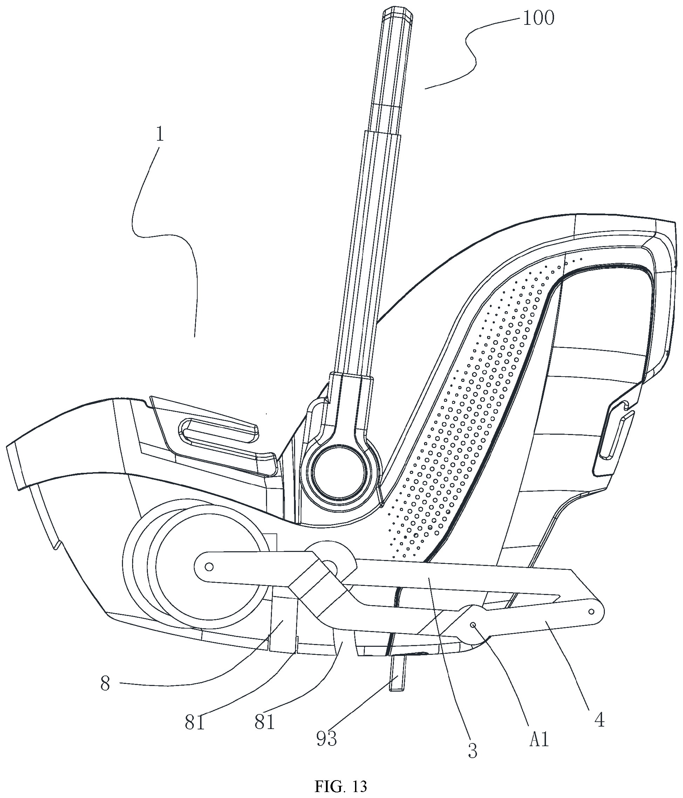

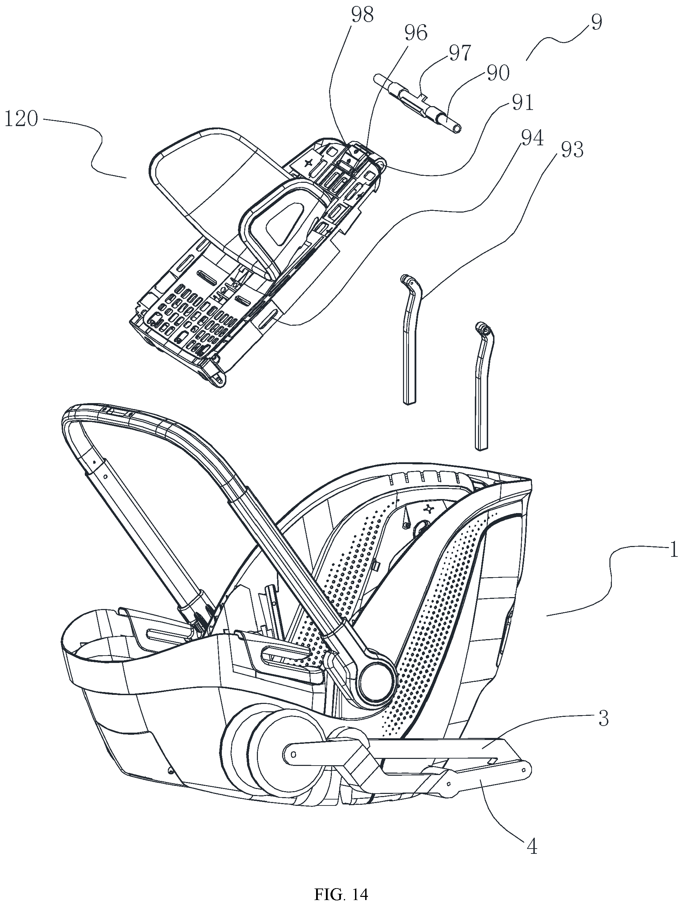

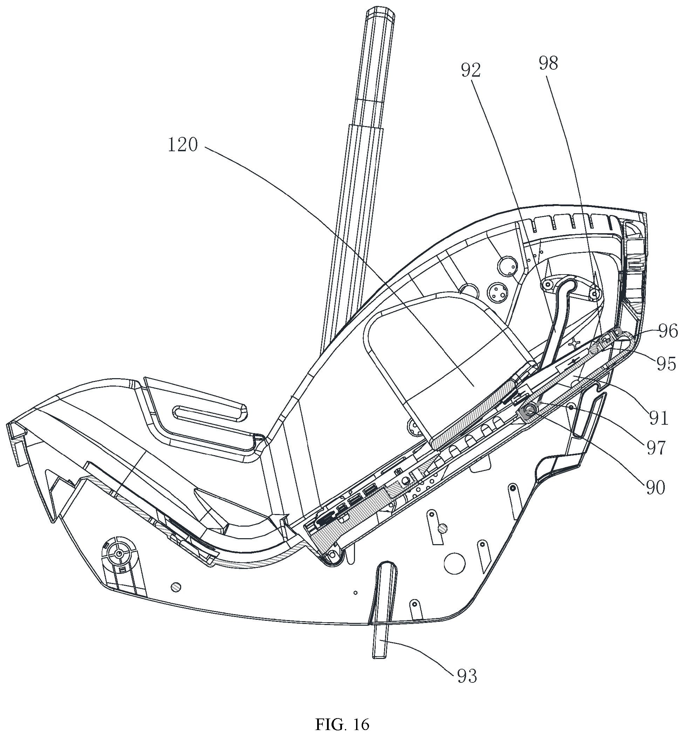

As shown in FIGS. 13 to 16, a backrest plate 120 is provided inside the backrest portion 12, a backrest adjustment mechanism 9 configured to adjust a highest gear angle and a lowest gear angle between the backrest plate 120 and the backrest portion 12 being provided between the backrest plate 120 and the backrest portion 12, the backrest adjustment mechanism 9 being configured to cause the backrest plate 120 to be locked at the highest gear angle after rotating relative to the backrest portion 12 in response to the baby carrier being in the first use state and being connected to a car seat or an independent base for use, such a structural design effectively avoiding the problem of damaging an infant's cervical spine due to forgetting adjustment and impact during vehicle movement, therefore being safer. The backrest adjustment mechanism 9 is also configured to allow the backrest plate 120 to be switched and adjusted between the highest gear angle and the lowest gear angle in the second use state, increasing personalized use adjustment for a comfortable riding experience.

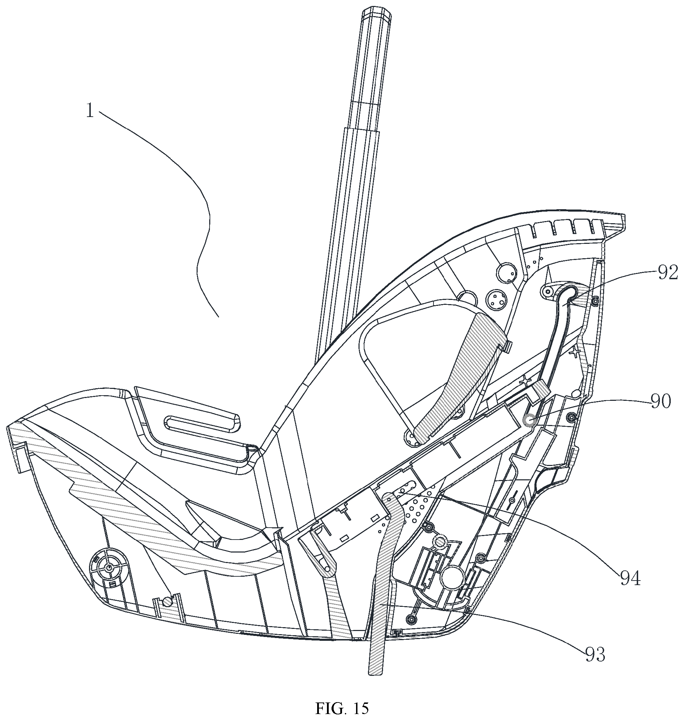

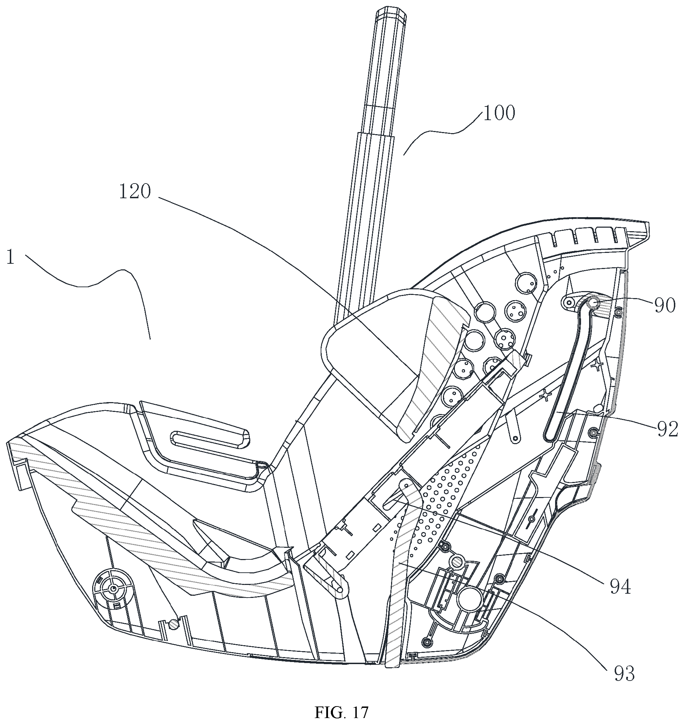

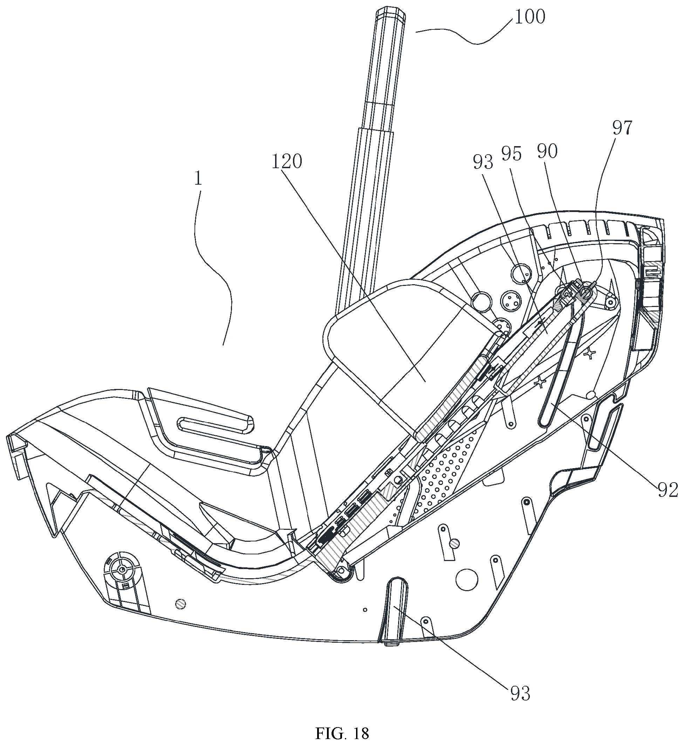

Specifically, as shown in FIGS. 15 to 18, a lower side of the backrest plate 120 is rotatably connected to the backrest portion 12, the backrest adjustment mechanism 9 including a backrest adjustment slide rod 90, a push rod 93, a moving sliding slot 91 provided on the backrest plate 120, and a fixed sliding slot 92 provided on the backrest portion 12, the moving sliding slot 91 and the fixed sliding slot 92 being arranged crosswise, and the backrest adjustment slide rod 90 being simultaneously slidably connected to the moving sliding slot 91 and the fixed sliding slot 92, a drive sliding slot 94 being further provided on the backrest plate 120, the push rod 93 being movably connected along its axial direction to the seat portion 11, and an upper end of the push rod 93 being slidably connected to the drive sliding slot 94, a lower end of the push rod 93 extending out from a bottom of the seat portion 11 in the second use state, and the lower end of the push rod 93 being pushed and retracted into the bottom of the seat portion 11 by an upper surface of the car seat or the independent base in the first use state. The backrest adjustment mechanism 9 further includes a slide rod locking block 95 provided on the backrest plate 120 and located at an upper part of the moving sliding slot 91 and configured to lock the backrest adjustment slide rod 90 in response to the backrest plate 120 being at the highest gear angle, an adjustment release button 98 configured to link an unlocking action of the slide rod locking block 95 being further provided on the backrest plate 120. A display window 96 is provided on the backrest plate 120, the backrest adjustment slide rod 90 being provided with a color display identification block 97 configured to be displayed and identified via the display window 96 in response to the backrest plate 120 being at the highest gear angle. As shown in FIGS. 19 and 20, the entire push rod moving along its axis upward in response to the lower end of the push rod 93 abutting against the upper surface of the car seat or the independent base, an upper end of the push rod then sliding in the drive sliding slot 94 and pushing the backrest plate to rotate about a pivot shaft pivotally connecting it to the backrest portion, thereby the moving sliding slot 91 relatively reducing an angle with the fixed sliding slot 92 and squeezing and pushing the backrest adjustment slide rod 90 to slide upward, until the lower end of the push rod completely retracting into the bottom of the seat portion, as shown in FIG. 17, the slide rod locking block 95 locking the backrest adjustment slide rod 90 at this time, the color display identification block 97 extending out from the display window 96 for a user to confirm that the backrest plate 120 is at the highest gear angle, ensuring use safety through the alerting function of the color display identification block 97.

Pressing the adjustment release button 98 in response to the backrest plate 120 needing adjustment to the lowest gear angle, the slide rod locking block 95 elastically retreating, the backrest adjustment slide rod 90 then disengaging from the slide rod locking block 95, and sliding down along the fixed sliding slot 92, causing the angle between the moving sliding slot and the fixed sliding slot to gradually increase, the backrest plate 120 gradually rotating about its connecting end with the backrest portion, until the backrest adjustment slide rod 90 sliding to a bottom of the moving sliding slot, the backrest plate reaching the lowest gear angle at this time.

In some implementations, the baby carrier of the present disclosure further includes a push handle assembly 100, the push handle assembly 100 being rotatably connected to the carrier body 1 via a push handle joint 200, the push handle joint 200 being configured to lock the push handle assembly 100 relative to the carrier body 1 at multiple angles. For specific implementation of the push handle joint 200, Chinese Patent ZL201680018456.8 discloses a corresponding structure, which is not repeated here.

In summary, the baby carrier of the present disclosure adopts a design solution, causing the overall structure to be more lightweight, meeting use requirements of easy carrying, easy folding/unfolding, easy pushing, and easy storage.

## Claims

1. A baby carrier, having a first use state and a second use state that are switchable with each other, comprising:
a carrier body, wherein the carrier body is provided with a seat portion and a backrest portion;
a joint assembly, wherein the joint assembly is rotatably provided on the carrier body, and a guiding slot is provided on the joint assembly;
a front leg assembly, wherein a front wheel is connected to a lower end of the front leg assembly, the front leg assembly is slidably connected to the guiding slot, and is rotatably connected to the carrier body through the joint assembly, and an upper end of the front leg assembly passes through the guiding slot;
a rear leg assembly, wherein a rear wheel is connected to a lower end of the rear leg assembly, an upper portion of the rear leg assembly away from the rear wheel is rotatably connected to the carrier body via a pivot shaft, and an upper end of the rear leg assembly is pivotally connected to the upper end of the front leg assembly;
the first use state is obtained in response to the rear leg assembly rotating clockwise relative to the carrier body around the pivot shaft, the front leg assembly rotating clockwise relative to the carrier body through the joint assembly, and the upper end of the rear leg assembly linkage urging the front leg assembly to slide upward along the guiding slot, causing the front leg assembly and the rear leg assembly to coordinately and linkagely fold and come together;
the second use state is obtained in response to the rear leg assembly rotating counterclockwise relative to the carrier body around the pivot shaft, the front leg assembly rotating counterclockwise relative to the carrier body through the joint assembly, and the upper end of the rear leg assembly linkage urging the front leg assembly to slide downward along the guiding slot, causing the front leg assembly and the rear leg assembly to coordinately and linkagely unfold.

2. The baby carrier according to claim 1, wherein the baby carrier is configured to be connected to a car seat for use or to be connected to an independent base for use in the first use state; and the baby carrier is configured to be used as an infant stroller in the second use state.

3. The baby carrier according to claim 1, further comprising a use state locking assembly, wherein the use state locking assembly is configured to lock the baby carrier in the first use state and the second use state.

4. The baby carrier according to claim 3, wherein the use state locking assembly is configured to automatically lock the front leg assembly in response to the front leg assembly rotating clockwise and abutting against a preset position of the seat portion to form the first use state, while the rear leg assembly is coordinately linkage by the front leg assembly and abuts against the seat portion; and the use state locking assembly is further configured such that after unlocking the first use state, the front leg assembly, the front wheel, the rear leg assembly, and the rear wheel are driven by their own gravity, driving the rear leg assembly to rotate counterclockwise around the pivot shaft while also driving the front leg assembly to rotate counterclockwise relative to the carrier body through the joint assembly, and the upper end of the rear leg assembly links with the front leg assembly and causes the front leg assembly to slide downward along the guiding slot, the front leg assembly and the rear leg assembly mutually and cooperatively unfold, and the use state locking assembly automatically locks the front leg assembly in response to the front leg assembly sliding downward along the guiding slot and unfolding to a preset position forming the second use state.

5. The baby carrier according to claim 3, wherein the joint assembly comprises a joint block rotatably connected to a side of the seat portion of the carrier body, the guiding slot is provided on the joint block, the use state locking assembly is configured to lock the front leg assembly in the first use state and the second use state, the use state locking assembly comprises a state locking pin elastically retractably provided on the carrier body and a state unlocking member configured to drive the state locking pin to retract and extend, and the state locking pin is eccentrically provided relative to a pivot axis of the joint assembly, and a first use state locking hole and a second use state locking hole are provided on the front leg assembly at intervals along a length direction of the front leg assembly.

6. The baby carrier according to claim 5, wherein the use state locking assembly is configured to simultaneously lock the joint block and the front leg assembly in the first use state and the second use state, the use state locking assembly further comprises a first joint locking hole and a second joint locking hole provided on the joint block, wherein the first joint locking hole and the second joint locking hole are correspondingly aligned with the first use state locking hole and the second use state locking hole respectively in the first use state and the second use state.

7. The baby carrier according to claim 5, wherein the front leg assembly comprises a sliding segment configured to be slidably and cooperatively connected to the guiding slot, the first use state locking hole is located on the sliding segment and close to an end side of the front wheel, and the second use state locking hole is located on the sliding segment and away from the end side of the front wheel.

8. The baby carrier according to claim 7, wherein the front leg assembly further comprises a first limiting portion and a second limiting portion correspondingly provided on both end sides of the sliding segment, and the state locking pin is aligned and elastically inserted into the first use state locking hole in response to the front leg assembly sliding relative to the guiding slot causing the first limiting portion to abut against an edge of an opening of the guiding slot, and the state locking pin is aligned and elastically inserted into the second use state locking hole in response to the front leg assembly sliding relative to the guiding slot causing the second limiting portion to abut against the edge of the opening of the guiding slot.

9. The baby carrier according to claim 1, wherein a flexible connecting member is provided between the front leg assembly and the rear leg assembly, and the flexible connecting member is straightened and tensioned in the second use state to limit a distance between the front wheel and the rear wheel.

10. The baby carrier according to claim 1, wherein reinforcing crossbars are provided between the two front leg assemblies and between the two rear leg assemblies, and corresponding avoidance structures configured to mutually avoid each other to allow the front wheels and the rear wheels to abut against both side surfaces of the seat portion in the first use state are provided on the reinforcing crossbars or on a bottom of the seat portion.

11. The baby carrier according to claim 1, wherein a backrest plate is provided on an inner side of the backrest portion, a backrest adjustment mechanism configured to adjust a highest gear angle and a lowest gear angle between the backrest plate and the backrest portion is provided between the backrest plate and the backrest portion, the backrest adjustment mechanism is configured to lock the backrest plate at the highest gear angle in response to the baby carrier being connected to a car seat or an independent base for use in the first use state after the backrest plate rotates relative to the backrest portion; and the backrest adjustment mechanism is simultaneously configured to allow the backrest plate to be switched and adjusted between the highest gear angle and the lowest gear angle in the second use state.

12. The baby carrier according to claim 11, wherein the lower side of the backrest plate is rotatably connected to the backrest portion, the backrest adjustment mechanism comprising a backrest adjustment slide rod, a push rod, a movable chute provided on the backrest plate and a fixed chute provided on the backrest portion, the movable chute and the fixed chute being arranged crosswise, and the backrest adjustment slide rod being simultaneously slidably connected to the movable chute and the fixed chute, the backrest plate further being provided with a drive chute, the push rod being movably connected along its axial direction to the seat portion, and an upper end of the push rod being slidably connected to the drive chute, a lower end of the push rod extending out from a bottom of the seat portion in the second use state, and the lower end of the push rod being pushed by an upper surface of a car seat or an independent base to retract into the bottom of the seat portion in the first use state.

13. The baby carrier according to claim 12, wherein the backrest adjustment mechanism further comprises a slide rod locking stopper provided on the backrest plate and located at an upper part of the movable chute for locking the backrest adjustment slide rod in response to the backrest plate being at the highest gear angle, the backrest plate further being provided with an adjustment release button for linking an unlocking action of the slide rod locking stopper.

14. The baby carrier according to claim 12, wherein the backrest plate is provided with a display window, and the backrest adjustment slide rod is provided with a color display identification block for being displayed and recognized by the display window in response to the backrest plate being at the highest gear angle.

15. The baby carrier according to claim 1, further comprising a push handle assembly, the push handle assembly and the carrier body being rotatably connected via a push handle joint, the push handle joint being configured to lock the push handle assembly relative to the carrier body at a plurality of angles.
